# EUROPEAN PATENT SPECIFICATION

(11) **EP 3 061 162 B1**
(45) Date of publication and mention of the grant of the patent: **04.09.2019**
(21) Application number: 14856505.4
(22) Date of filing: 22.10.2014
(51) Int. Cl.: H01R 24/38, H01R 9/05, H02J 50/05

(54) **COAXIAL CABLE AND CONNECTOR WITH CAPACITIVE COUPLING**
KOAXIALKABEL UND VERBINDER MIT KAPAZITIVER KOPPLUNG
CÂBLE ET CONNECTEUR COAXIAL À COUPLAGE CAPACITIF

(30) Priority: 24.10.2013 US 201361895113 P; 10.12.2013 US 201314102042; 13.06.2014 US 201414303745
(43) Date of publication of application: 31.08.2016
(73) Proprietor: CommScope Technologies LLC, Hickory, NC 28602 (US)
(72) Inventor: PAYNTER, Jeffrey D., Momence, Illinois 60954 (US); HARWATH, Frank, Naperville, Illinois 60564 (US); VACCARO, Ronald A., Shorewood, Illinois60404 (US)
(74) Representative: Parker, Andrew James
(86) International application number: PCT/US2014/061685
(87) International publication number: WO 2015/061394

(56) References cited:
- JP-A- 2012 508 431
- US-A1- 2010 007 441
- US-A1- 2010 273 349
- US-A1- 2011 256 760
- US-A1- 2013 100 571
- US-A1- 2014 134 878
- US-B1- 7 497 729

## Description

### Field of the Invention

The present invention is directed generally to electrical cable connectors, and more particularly to coaxial connectors for electrical cable.

### Background of the Invention

Coaxial cables are commonly utilized in RF communications systems. A typical coaxial cable includes an inner conductor, an outer conductor, a dielectric layer that separates the inner and outer conductors, and a jacket that covers the outer conductor. Coaxial cable connectors may be applied to terminate coaxial cables, for example, in communication systems requiring a high level of precision and reliability.

Coaxial connector interfaces provide a connect/disconnect functionality between (a) a cable terminated with a connector bearing the desired connector interface and (b) a corresponding connector with a mating connector interface mounted on an apparatus or on another cable. Typically, one connector will include a structure such as a pin or post connected to an inner conductor and an outer conductor connector body connected to the outer conductor; these are mated with a mating sleeve (for the pin or post of the inner conductor) and another outer conductor connector body of a second connector. Coaxial connector interfaces often utilize a threaded coupling nut or other retainer that draws the connector interface pair into secure electro-mechanical engagement when the coupling nut (which is captured by one of the connectors) is threaded onto the other connector.

Passive Intermodulation Distortion (PIM) is a form of electrical interference/signal transmission degradation that may occur with less than symmetrical interconnections and/or as electro-mechanical interconnections shift or degrade over time. Interconnections may shift due to mechanical stress, vibration, thermal cycling, and/or material degradation. PIM can be an important interconnection quality characteristic, as PIM generated by a single low quality interconnection may degrade the electrical performance of an entire RF system. Thus, the reduction of PIM via connector design is typically desirable.

US 2013/100571 A1 discloses a protective device with a first interface, a second interface, and a housing. The interfaces are configured to mate with coaxial cable connector and device interfaces. The first interface of the protective device includes a first interface pin having a longitudinal axis. The second interface includes a second interface pin, which includes a socket end. US 2014/134878 A1 relates to connectors with a capacitively coupled connection interface with improved RF isolation.

### Summary

As a first aspect, embodiments of the invention are directed to a coaxial connector junction comprising first and second coaxial connectors. The first coaxial connector comprises: a first central conductor extension comprising a substantially cylindrical post; a first outer conductor extension spaced apart from and circumferentially surrounding the first central conductor extension; and a first dielectric spacer interposed between the first central conductor extension and the first outer conductor extension. The second coaxial connector comprises: a second central conductor extension, the second central conductor extension including a substantially cylindrical cavity therein; a second outer conductor extension spaced apart from and circumferentially surrounding the second central conductor extension; and a second dielectric spacer interposed between the second central conductor extension and the second outer conductor extension. The first coaxial connector engages the second coaxial connector, the post of the first central conductor extension being inserted into the cavity of the second central conductor extension such that a capacitive element is created between the first and second central conductor extensions by a gap between the first central conductor extension and the second central conductor extension.

As a second aspect, embodiments of the invention are directed to a coaxial connector junction, comprising a first coaxial connector and a second coaxial connector. The first coaxial connector comprises: a first central conductor extension comprising a post, the post at least partially covered by a first dielectric layer comprising a shrink sleeve; a first outer conductor extension spaced apart from and circumferentially surrounding the first central conductor extension; and a first dielectric spacer interposed between the first central conductor extension and the first outer conductor extension. The second coaxial connector
comprises: a second central conductor extension, the second central conductor extension including a cavity therein; a second outer conductor extension spaced apart from and circumferentially surrounding the second central conductor extension; and a second dielectric spacer interposed between the second central conductor extension and the second outer conductor extension. The first coaxial connector engages the second coaxial connector, the post of the first central conductor extension being inserted into the cavity of the second central conductor extension such that a capacitive element is created between the first and second central conductor extensions.

As a third aspect, embodiments of the invention are directed to a coaxial connector junction comprising a first coaxial connector and a second coaxial connector. The first coaxial connector comprises: a first central conductor extension; a dielectric element attached to the first central conductor extension, the dielectric element having a flat contact surface; a first outer conductor extension spaced apart from and circumferentially surrounding the first central conductor extension; and a first dielectric spacer interposed between the first central conductor extension and the first outer conductor extension. The second coaxial connector comprises: a second central conductor extension having a flat contact surface; a second outer conductor extension spaced apart from and circumferentially surrounding the second central conductor extension; and a second dielectric spacer interposed between the second central conductor extension and the second outer conductor extension. The first coaxial connector engages the second coaxial connector, the contact surface of the second central conductor extension abutting the contact surface of the dielectric element attached to the first central conductor extension such that a first capacitive element is created between the first and second central conductor extensions.

As a fourth aspect, embodiments of the invention are directed to a coaxial connector junction comprising first and second coaxial connectors. The first coaxial connector comprises: a first central conductor extension; a first outer conductor extension spaced apart from and circumferentially surrounding the first central conductor extension; and a first dielectric spacer interposed between the first central conductor extension and the first outer conductor extension. The second coaxial connector comprises: a second central conductor extension; a second outer conductor extension spaced apart from and circumferentially surrounding the second central conductor extension; and a second dielectric spacer interposed between the second central conductor extension and the second outer conductor extension. The first coaxial connector engages the second coaxial connector to electrically connect (i) the first and second central conductor extensions and (ii) the first and second outer conductor extensions, the engaged connectors defining a longitudinal axis. Each of the first central conductor extension, the first outer conductor extension, the second central conductor extension, and the second outer conductor extension has circular symmetry about the longitudinal axis, such that electrical properties of the engaged first and second coaxial connectors are substantially the same irrespective of the relative orientations of the first and second coaxial connectors about the longitudinal axis.

As a fifth aspect, embodiments of the invention are directed to a coaxial connector junction, comprising a first coaxial connector and a second coaxial connector. The first coaxial connector comprises: a first central conductor extension; a first outer conductor extension spaced apart from and circumferentially surrounding the first central conductor extension; and a first dielectric spacer interposed between the first central conductor extension and the first outer conductor extension. The second coaxial connector comprises: a second central conductor extension, the second central conductor extension including a substantially cylindrical cavity therein; a second outer conductor extension spaced apart from and circumferentially surrounding the second central conductor extension; and a second dielectric spacer interposed between the second central conductor extension and the second outer conductor extension. As the first coaxial connector engages the second coaxial connector, the first outer conductor extension at least partially overlies the second outer conductor extension, and a capacitive element is formed between the first outer conductor extension and the second outer conductor extension by a gap therebetween. The connector junction further comprises a retaining member interposed between the first outer conductor extension and the second outer conductor extension, the retaining member configured to prevent relative movement of the first and second coaxial connectors under bending load.

As a sixth aspect, embodiments of the invention are directed to a coaxial connector junction comprising a first coaxial connector and a second coaxial connector. The first coaxial connector comprises: a first central conductor extension; a first outer conductor extension spaced apart from and circumferentially surrounding the first central conductor extension; and a first dielectric spacer interposed between the first central conductor extension and the first outer conductor extension. The second coaxial connector comprises: a second central conductor extension, the second central conductor extension including a substantially cylindrical cavity therein; a second outer conductor extension spaced apart from and circumferentially surrounding the second central conductor extension; and a second dielectric spacer interposed between the second central conductor extension and the second outer conductor extension. As the first coaxial connector engages the second coaxial connector, the first outer conductor extension at least partially overlies the second outer conductor extension, and a capacitive element is formed between the first outer conductor extension and the second outer conductor extension by a gap therebetween. The connector junction further comprises an RF-absorbent member interposed between the first outer conductor extension and the second outer conductor extension.

As a seventh aspect embodiments of the invention are directed to a coaxial connector junction comprising a first coaxial connector and a second coaxial connector. The first coaxial connector comprises: a first central conductor extension with a dielectric layer applied thereto; a dielectric guard element attached to the first central conductor extension, the guard element having an outermost diameter that is greater than the outermost diameter of the dielectric layer applied to the first central conductor extension; a first outer conductor extension spaced apart from and circumferentially surrounding the first central conductor extension; and a first dielectric spacer interposed between the first central conductor extension and the first outer conductor extension. The second coaxial connector comprises: a second central conductor extension; a second outer conductor extension spaced apart from and circumferentially surrounding the second central conductor extension; and a second dielectric spacer interposed between the second central conductor extension and the second outer conductor extension. The first coaxial connector engages the second coaxial connector to electrically connect (i) the first and second central conductor extensions and (ii) the first and second outer conductor extensions.

### Brief Description of the Figures

**Figure 1** is a partial cross-section of the coaxial cable-connector assembly according to embodiments of the invention, the assembly being shown in a mated condition.
**Figure 2** is a partial cross-section of the coaxial cable-connector assembly of **Figure 1** shown in an unmated condition.
**Figure 3** is an enlarged partial section of the coaxial cable-connector assembly of **Figure 1****.**
**Figure 4** is an enlarged partial section of the coaxial cable-connector assembly of **Figure 1****.**
**Figure 5** is an enlarged partial section of the coaxial cable-connector assembly of **Figure 1****.**
**Figure 6** is an enlarged partial section of the coaxial cable-connector assembly of **Figure 2****.**
**Figure 7** is an enlarged partial section of the coaxial cable-connector assembly of **Figure 1****.**
**Figure 8** is a partial cross-section of a coaxial cable-connector assembly according to additional embodiments of the invention, with the assembly shown in a mated condition.
**Figure 9** is a partial cross-section of the coaxial cable-connector assembly of **Figure 8** shown in an unmated condition.
**Figure 10** is an enlarged partial section of the coaxial cable-connector assembly of **Figure 8****.**
**Figure 11** is an enlarged partial section of the coaxial cable-connector assembly of **Figure 8****.**
**Figure 12** is an enlarged partial cross-section of a coaxial cable-connector assembly according to further embodiments of the invention, with the assembly shown in a mated condition.
**Figure 13** is an enlarged partial cross-section of a coaxial cable-connector assembly according to further embodiments of the invention, with the assembly shown in a mated condition.
**Figure 14** is an enlarged partial cross-section of a coaxial cable-connector assembly according to further embodiments of the invention, with the assembly shown in a mated condition.
**Figure 15** is a greatly enlarged partial cross-section of the coaxial cable-connector assembly of **Figure 14.**

### Detailed Description of Embodiments of the Invention

The present invention is described with reference to the accompanying drawings, in which certain embodiments of the invention are shown. This invention may, however, be embodied in many different forms and should not be construed as limited to the embodiments that are pictured and described herein; rather, these embodiments are provided so that this disclosure will be thorough and complete, and will fully convey the scope of the invention to those skilled in the art. It will also be appreciated that the embodiments disclosed herein can be combined in any way and/or combination to provide many additional embodiments.

Unless otherwise defined, all technical and scientific terms that are used in this disclosure have the same meaning as commonly understood by one of ordinary skill in the art to which this invention belongs. The terminology used in the above description is for the purpose of describing particular embodiments only and is not intended to be limiting of the invention. As used in this disclosure, the singular forms "a", "an" and "the" are intended to include the plural forms as well, unless the context clearly indicates otherwise. It will also be understood that when an element (e.g., a device, circuit, etc.) is referred to as being "connected" or "coupled" to another element, it can be directly connected or coupled to the other element or intervening elements may be present. In contrast, when an element is referred to as being "directly connected" or "directly coupled" to another element, there are no intervening elements present.

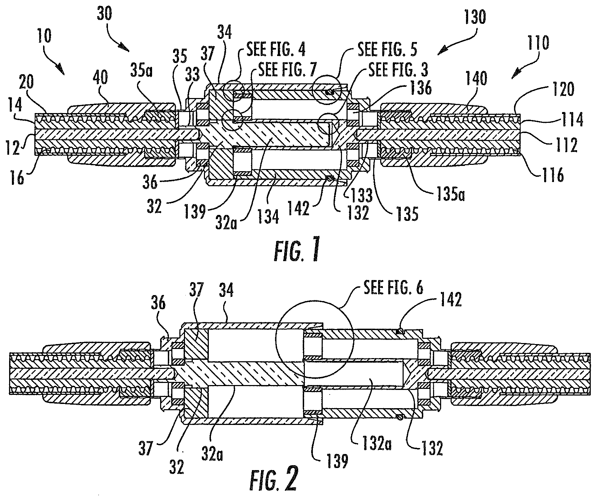

**Figures 1** and **2** illustrate two coaxial cables, designated broadly at **10** and **110,** according to embodiments of the present invention. The cable **10** includes a central conductor **12,** a dielectric layer **14** that circumferentially overlies the central conductor **12,** an outer conductor **16** that circumferentially overlies the dielectric layer **14,** and a polymeric cable jacket **20** that circumferentially overlies the outer conductor **16.** Similarly, the cable **110** includes a central conductor **112,** a dielectric layer **114** that circumferentially overlies the central conductor **112,** an outer conductor **116** that circumferentially overlies the dielectric layer **114,** and a polymeric cable jacket **120** that circumferentially overlies the outer conductor **116.** These components will be well-known to those of skill in this art and need not be described in detail herein. **Figures 1** and **2** illustrate that the outer conductors **16, 116** may be of a corrugated profile; alternatively, the outer conductors **16, 116** may not have a corrugated profile. Both of these outer conductor configurations are known to those of skill in this art and need not be described in detail herein.

Referring again to **Figures 1** and **2****,** the cable **10** includes a plug **30** that enables the cable **10** to be connected with a jack **130** of the mating coaxial cable **110** (those skilled in this art will recognize that, in some instances, it may be unclear which of two mating connectors is the "plug" and which is the "jack". The terms are largely interchangeable as used herein, as each is intended to refer to a coaxial connector that mates with another mating coaxial cable connector). **Figure 1** shows the plug **30** and jack **130** in their mated condition; **Figure 2** shows the plug **30** and jack **130** in a largely unmated condition as the jack **130** is being inserted into the plug **30.**

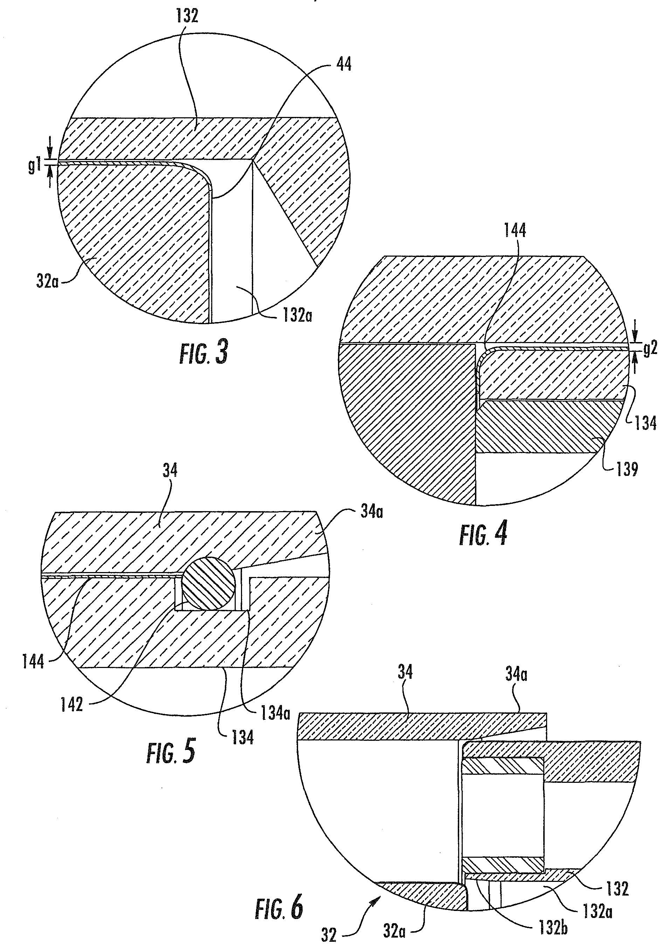

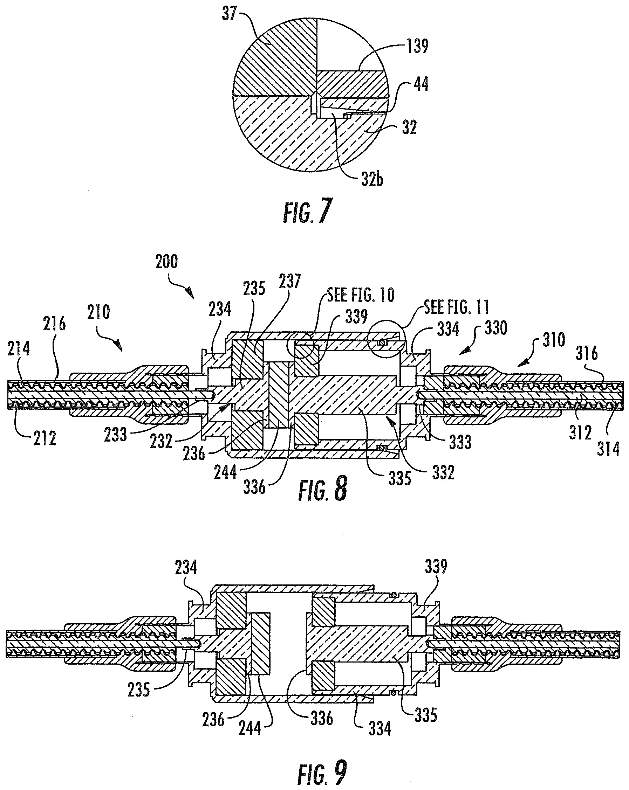

The plug **30** includes a central conductor extension **32,** an outer conductor extension **34** and an overmold body **40.** The central conductor extension **32** has a generally cylindrical post **32a** and is mounted on and is in electrical contact with the central conductor **12** of the cable **10** via a boss **33.** As can be seen in **Figure 3****,** the post **32a** has rounded edges at its free end. The outer conductor extension **34** is mounted in electrical contact with the outer conductor **16** of the conductor **10** via a tail **35** that is soldered to the outer conductor **16** at a solder joint **35a.** The free end **34a** of the outer conductor **34** is bevelled to facilitate insertion of the jack **130** (see **Figure 5**). An annular dielectric spacer **36** is positioned between the central conductor extension **32** and the outer conductor extension **34** near the junction between the central conductor **12** and the central conductor extension **32.** Another annular dielectric spacer **37** abuts the spacer **36** and maintains separation between the central conductor extension **32** and the outer conductor extension **34.** The spacers **36, 37** position the outer conductor extension **34** to be spaced apart from and to circumferentially surround the central conductor extension **32.** The central conductor extension **32** includes an annular recess **32b** radially inwardly of the spacer **36** (see **Figure 7**). The overmold body **40** surrounds the end of the cable **10** and the portion of the tail **35** that is soldered to the outer conductor **16.**

As can be seen in **Figure 3****,** the post **32a** of the central conductor extension **32** underlies a dielectric layer **44.** In the illustrated embodiment, the dielectric layer **44** is formed of a polymeric shrink sleeve; in one example, the shrink sleeve may be formed of polyester or PTFE. The dielectric layer **44** is typically between about 0.001 and 0.003 inches in thickness. As can be seen in **Figure 7****,** the end portion of the sleeve comprising the dielectric layer **44** shrinks into the recess **32b,** which helps to fix the dielectric layer **44** in place.

Referring again to **Figures 1** and **2****,** the jack **130** includes a central conductor extension **132,** an outer conductor extension **134,** and an overmold body **140.** The central conductor extension **132** is mounted on and is in electrical contact with the central conductor **112** of the cable **110** via a boss **133.** The central conductor extension **132** is hollow at its free end, forming a cavity **132a** with a bevelled end **132b** (see **Figures 2** and **6**). The outer conductor extension **134** is mounted in electrical contact with the outer conductor **116** of the conductor **110** via a tail **135** that is soldered to the outer conductor **116** at a solder joint **135a.** As can be seen in **Fig. 4****,** the outer conductor extension **134** has a rounded edge at its free end. An annular dielectric spacer **136** is positioned between the central conductor extension **132** and the outer conductor extension **134** near the junction between the central conductor **112** and the central conductor extension **132.** Another annular dielectric spacer **139** is located at the free ends of the central conductor extension **132** and the outer conductor extension **134** and maintains separation between the central conductor extension **132** and the outer conductor extension **134.** The spacers **136, 139** position the outer conductor extension 134 to be spaced apart from and circumferentially surround the central conductor extension **132.** The overmold body **140** surrounds the end of the cable **110** and the portion of the tail **135** that is soldered to the outer conductor **116.** Also, an O-ring **142** is located within an annular recess **134a** in the outer conductor extension **134** (see **Figure 5**).

A dielectric layer **144** overlies the outer conductor extension **134** (see **Figures 4** and **5**). Like the dielectric layer **44,** in the illustrated embodiment, the dielectric layer **144** is formed of a polymeric shrink sleeve; in one example, the shrink sleeve may be formed of polyester or PTFE. The dielectric layer **144** is typically between about 0.001 and 0.003 inches in thickness. As can be seen in **Figure 5****,** the end portion of the sleeve comprising the dielectric layer **144** shrinks into the recess **134a,** which helps to fix the dielectric layer **144** in place.

As shown in **Figure 1****,** the central conductor extension **32** and the outer conductor extension **34** of the plug **30** are configured to mate with the central conductor extension **132** and the outer conductor extension **134** of the jack **130.** More specifically, the post **32a** of the central conductor extension **32** of the plug **30** fits within the cavity **132a** of the central conductor extension **132** of the jack **130,** while the outer conductor extension **134** of the jack **130** fits within the walls of the partially overlying outer conductor extension **34** of the plug **30.** The O-ring **142** is compressed radially inwardly by the outer conductor extension **34,** thereby forming a watertight seal between the plug **30** and jack **130** (see **Figure 5**).

**Figure 3** illustrates that, when the plug **30** and jack **130** are mated, a gap **g1** is formed between the outer surface of the post **32a** and the inner surface of the central conductor extension **132.** In the illustrated embodiment, both the dielectric layer **44** and an air space are present in the gap **g1**, although in some embodiments the dielectric layer **44** fills the gap **g1** entirely, and in other embodiments the gap **g1** may have no explicit dielectric layer **44.** The presence of the dielectric layer **44** and/or the air space electrically insulates the central conductor extension **32** of the plug **30** from the central conductor extension **132** of the jack **130,** thereby forming a capacitive element between these components (see **Figure 3**). The capacitive element so created can avoid the generation of PIM that can occur in interconnecting coaxial cables.

Similarly, and as can be seen in **Figure 4****,** a gap **g2** is formed between the outer surface of the outer conductor extension **134** of the jack **130** and the inner surface of the outer conductor extension **34** of the plug **30.** In the illustrated embodiment, both the dielectric layer **144** and an air space are present in the gap **g2,** although in some embodiments the dielectric layer **144** fills the gap **g2** entirely, and in other embodiments the gap **g2** may have no explicit dielectric layer **144.** The presence of the dielectric layer **144** and/or the air space electrically insulates the outer conductor extension **134** of the jack **130** from the outer conductor extension **34** of the plug **30,** thereby forming a capacitive element between these components that can avoid the generation of PIM.

The central elements when mated form a resonant cavity, which allows the mated plug **30** and jack **130** to be "tuned" to operate beneficially and/or optimally at particular frequencies. This can be achieved by selecting a combination of cavity length, type of dielectric material, thickness of dielectric material, and/or thickness of the air space to provide a desired capacitance. Typically minimizing the air space can provide a broadband improvement in reflection by reducing the distance between the conductors, thus increasing the capacitance. Air gaps may be used when necessary or desirable to allow for ease of insertion given tolerances of the assembled parts.

In some embodiments, air space in the gap **g1** and/or the gap **g2** can provide a dampening effect during mating of the plug **30** and the jack **130.** For example, if the air space in the gap **g2** is between about 0.05 and 0.15 mm, air flow from the cavity of the plug 30 upon insertion of the jack **130** is sufficiently restricted that, as insertion proceeds, an air "cushion" is formed. In some prior connectors, and in particular blind-mated connectors (such as blind mated interfaces associated with heavy antenna/radio-head, etc.) there is a danger of the interfaces slamming together and damaging connector parts, brackets, fasteners and the like. With a restricted air flow that creates a built-in air cushion, time is required to allow the air to leak out of the interface. This can produce a "soft" mating, which can eliminate the danger associated with components slamming together.

As can be seen in **Figure 6****,** the rounded outer edge of the free end of the outer conductor extension **134** of the jack **130** can facilitate insertion of the outer conductor extension **134** within the outer conductor extension **34** of the plug **30.** Insertion is also aided by the slight bevelling in the free end **34a** of the outer conductor extension **34** of the plug **30** (see again **Figure 6**). In a similar manner, and as shown in **Figure 3****,** the rounded edge of the free end of the post **32a** of the central conductor extension **32** of the plug **30** can facilitate insertion of the central conductor extension **32** within the cavity **132a** of the central conductor extension **132** of the jack **130.**

Notably, and as can be seen in **Figures 2** and **6****,** the outer conductor extension **34** extends farther away from the cable **10** (and deeper into the jack **130**) than does the central conductor extension **32,** such that, when the plug **30** and jack **130** are brought together to mate as in **Figures 2** and **6****,** the outer conductor extension **134** of the jack **130** contacts and engages the outer conductor extension **34** prior to engagement of the central conductor extensions **32, 132**. The bevelled end **34a** of the outer conductor extension **34** tends to "center" the jack **130** relative to the plug **30,** thereby facilitating engagement and mating of the central conductor extensions **32,132.** Engagement of the central conductor extensions **32, 132** is also facilitated by the bevelling of the end **132b** of the central conductor extension **132** (see **Figure 6**).

As shown in **Figures 1** and **4****,** mating of the plug 30 and jack **130** is complete when the jack **130** "bottoms out" against the plug **30,** which occurs when the spacer **139** of the jack **130** contacts the spacer **37** of the plug **30.** As can be seen in **Figure 7****,** the spacer **139** extends slightly farther away from the cable **110** (and deeper into the plug **130)** than does the central conductor extension **132,** such that the central conductor extension **132** is prevented from contact and electrical connection with the central conductor **32,** thereby preserving the capacitively coupled electrical connection created by the dielectric layer **44.**

In addition to the materials discussed above, exemplary materials for the dielectric layers **44, 144** include other polymeric materials, ceramic materials, and glass. The dielectric strength of the materials of the dielectric layers **44, 144** is typically above about 8 MV/m. Although application as a shrink sleeve is illustrated and described herein, the dielectric layers **44, 144** may be applied in a number of different ways, including painting, spraying, sputter coating, or the like. In some embodiments, the capacitive element is sized and arranged so that it creates capacitance on the order of 10-50 pico farads between the conductor extensions **32, 34** of the plug **30** and the respective conductor extensions **132, 134** of the jack **130.**

Although the plug **30** and jack **130** are illustrated herein attached to free coaxial cables **10, 110,** in some embodiments one of these connectors may be mounted within a structure, such as a shoulder plate such as that described in co-pending and co-assigned U.S. Patent Publication No. 2013/0065415, that presents multiple connectors at once. Such a shoulder plate or similar mounting structure may be mounted on an antenna, remote radio head or the like.

Referring now to **Figures 8-11****,** another coaxial cable-connector assembly, designated broadly at **200,** is shown therein. The assembly **200** includes a plug **230** and a jack **330;** the plug **230** is attached to a coaxial cable **210** of similar construction to that described above, and the jack **330** is attached to a coaxial cable **310,** also of similar construction. The plug **230** and the jack **330** are described below.

The plug **230** includes an outer conductor extension **234** similar in configuration to the outer conductor extension **34** of the plug **30.** The plug **230** further includes a central conductor extension **232** with a boss **233** that fits over the central conductor **212** of the cable **210.** A body **235** is attached to the boss **233.** A dielectric spacer **237** is positioned between the body **235** and the outer conductor extension **234.** A circular flange **236** extends from the free end of the body **235** opposite the boss **233.**

A dielectric disk **244** with a flat contact surface is mounted on the flange **236.** The dielectric disk **244** may be formed of any number of dielectric materials. In some embodiments, the dielectric disk may be formed of polyester, PTFE, ceramic, glass or the like. Typically, the dielectric disk **244** is between about 0.001 and 0.003 inches in thickness (the thickness of the dielectric disk **244** is greatly exaggerated in **Figures 8** and **9** for illustrative purposes).

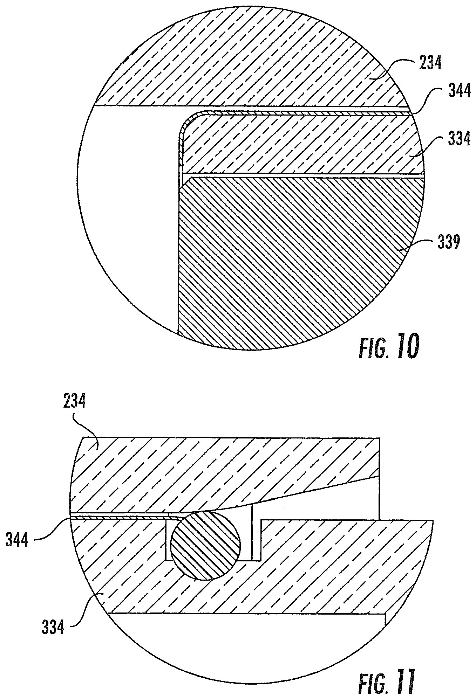

The jack **330** includes an outer conductor extension **334** that is similar to the outer conductor extension **134** of the jack **130** described above. The outer conductor extension **334** is covered with a dielectric layer **344** similar to the dielectric layer **144** described above (**Figures 10** and **11**). A central conductor extension **332** is attached at one end to the central conductor **312** of the cable **310** via a boss **333.** The central conductor extension **332** includes a solid body **335** that extends away from the boss **333.** A circular flange **336** with a flat contact surface extends from the free end of the body **335** that is opposite the boss **333.** The flange **336** is sized to be similar in diameter to the flange **236** of the plug **230.** A dielectric spacer **339** is positioned between the body **335** of the central conductor extension **332** and the outer conductor extension **334** so that it abuts the underside of the flange **336.**

As can be seen in **Figures 8** and **9****,** the plug **230** and jack **330** can be mated by inserting the outer conductor extension **334** of the jack **330** within the outer conductor extension **234** of the plug **230.** Insertion proceeds until the contact surface of the flange **336** of the jack **330** contacts the contact surface of the dielectric disk **244** of the plug **230.** At this point the outer conductor extension **234** of the plug **230** is electrically insulated from the outer conductor extension **334** of the jack **330,** and the flange **236** of the plug **230** is electrically insulated from the flange **336** of the jack **330,** thereby creating capacitive coupling that can minimize or prevent PIM.

Those skilled in this art will appreciate that the plug **230** and jack **330** may take different forms. For example, the central conductor extensions **232, 242** need not have flanges **236, 336** that extend radially outwardly from their respective bodies **235, 335,** but instead may present contact surfaces that are the same size or even narrower than the bodies **235, 335**. The dielectric disk **244** may be a dielectric elements of another configuration. Also, the dielectric disk **244** may be attached to the central conductor extension **332** of the jack **330** rather than to the central conductor extension **232** of the plug **230.** Other variations may also be employed.

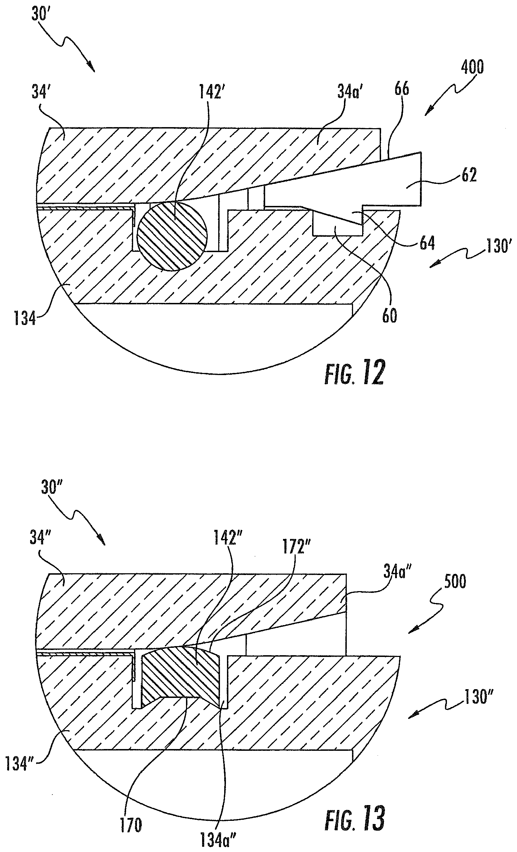

**Figure 12** illustrates another embodiment of an RF coaxial cable-connector assembly, designated broadly at **400,** that includes a plug **30'** and a jack **130'** (only portions of which are shown in **Figure 12**). The outer conductor extension **34'** of the plug **30'** of the assembly **400** may be of the same construction as described above for the outer conductor extensions **34, 234**. The outer conductor extension **134'** of the jack **130'** of the assembly **400** is similar to the outer conductor extensions **134, 334**, but also includes an annular, outwardly-facing recess **60** located such that it is positioned radially inwardly of the beveled end **34a'** of the outer conductor extension **34'** when the plug **30'** and the jack **130'** are mated. An annular retaining ring **62** includes an inwardly-extending projection **64** that fits within the recess **60.** The retaining ring **62** is generally cuneate (i.e., wedge-shaped) in cross-section, with its narrower end pointing toward the O-ring **142',** The outer surface **66** of the retaining ring **62** contacts the inner surface of the beveled end **34a'** of the outer conductor extension **34'.**

The retaining ring **62** is typically formed of a dielectric material. Exemplary materials include polymeric materials such as PFTE, hard rubber and TPX. The material may also have a hardness of about 60 Shore D or higher.

The retaining ring **62** can provide the assembly **400** with additional safeguards against PIM. As noted above, in some embodiments there may be a gap present between (a) the outer conductor extension **34'** of the plug and the outer conductor extension **134'** of the jack, (b) the inner conductor extension **32** of the plug and the inner conductor extension **132** of the jack, or both (a) and (b). In such embodiments, the gap imposes a dielectric effect on the connectors. However, if the assembled plug and jack are subjected to outside forces (in particular bending forces, which may be present if the assembled cables are bent such that the radius of curvature of the cables on either side of the plug and jack is decreased), shifting of the plug and jack relative to each other may occur. Such shifting may result in distortion of an RF signal and/or unintentional DC contact between components. The retaining ring **62** may prevent shifting by buttressing the relative positions of the plug and jack.

In addition, if the retaining ring **62** is formed of an RF-absorbent material, the retaining ring **62** may serve to increase electrical isolation and/or decrease RF leakage.

Referring now to **Figure 13****,** an alternative assembly, designated broadly at **500,** is illustrated therein. The assembly **500** (which includes a plug **30"** and a jack **130"**) provides a slightly different approach to the shifting and RF leakage issues discussed above. In particular, the outer conductor extension **134"** of the jack **130"** includes a convex surface **170** in the recess **134a".** Also, the O-ring **142** is replaced with a gasket **142"** having a generally square or rectangular cross-section. When the gasket **142"** is fitted within the recess **134a",** the convex surface **170** deforms the gasket **142"** to have a convex outer surface **172.** The outer surface **172** presses against the inner surface of the beveled end **34a"** of the outer conductor extension **34"** of the plug **30",** and thereby can provide the position stabilizing effect described above in connection with the retaining ring **62.**

The gasket **170** is typically formed of a dielectric material. Exemplary materials include polymeric materials such as PFTE and silicone rubber. The material may also have a hardness of between about 40 and 90 Shore D. The material may also be RF-absorbent.

Those skilled in this art will recognize that structures other than the retaining ring **62** and the gasket **170** may be employed to maintain the proper spacing of the plug and jack when mated. Such a structure may be configured to inhibit collapsing of the gap between the outer conductor extensions **34, 134** and/or the gap between the inner conductor extensions **32,132,** particularly when subjected to bending forces.

Referring now to an alternative assembly. The assembly includes a plug and a jack, wherein the jack may be similar or identical to the jack discussed above. The plug may be similar to the plug discussed above, but with some variation in the inner conductor extension. More specifically, the inner conductor extension is a hollow cylinder rather than as a solid post. The cylinder has a dielectric layer (typically in the form of a coating) on its outer surface. Moreover, at its open end the **636** receives a dielectric guide element. The guide element has a post that fits within the cylinder and a frustoconical guard that resides beyond the end of the cylinder. The guard has an outermost diameter **O** that is greater than the diameter of the dielectric layer.

The guard can protect the dielectric layer during insertion of the cylinder into the cavity of the central conductor extension of the jack. Because the outer diameter **O** of the guard exceeds that of the dielectric layer, the guard will contact the inner surface of the cavity rather than allowing the dielectric layer to do so, thereby preventing banging, scraping and the like of the dielectric layer during insertion.

In some embodiments, the dielectric layer between the central conduction extension of the plug and the central conductor extension of the jack may be formed of a different dielectric material than the dielectric layer
between the outer conductor extension of the plug and the outer conductor extension of the jack. In particular, in some embodiments the dielectric layer between the central conductor extensions may have a higher dielectric strength than that of the dielectric layer between the outer conductor extensions. Inasmuch as higher dielectric strength materials may be more brittle or susceptible to scratching, the inclusion of the guard may be desirable in connection with such high dielectric strength materials.

Those skilled in this art will appreciate that, in some embodiments, the outer conductor extension of the jack may also benefit from a guard that protects a dielectric layer applied thereto.

It should also be noted any of the plugs and jacks described above have circular symmetry about the longitudinal axis created by the mated assembly, such that a plug and corresponding jack may be mated with each other in any orientation about the longitudinal axis. More specifically, a plug may be rotated to any orientation about the longitudinal axis and still be mated with a mating jack, irrespective of the orientation of the jack about the longitudinal axis, without changing the electrical performance of the mated assembly, including return loss, passive modulation and PIM. This capability can significantly facilitate mating of a jack and plug, particularly in locations that are difficult for an operator to reach.

The foregoing is illustrative of the present invention and is not to be construed as limiting thereof. Although exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. The invention is defined by the following claims, with equivalents of the claims to be included therein.

## Claims

1. A coaxial connector junction, comprising:
(a) a first coaxial connector, comprising:
a first central conductor extension (32) comprising a substantially cylindrical post (32a);
a first outer conductor extension (34) spaced apart from and circumferentially surrounding the first central conductor extension (32); and
a first dielectric spacer (37) interposed between the first central conductor extension (32) and the first outer conductor extension (34);
(b) a second coaxial connector, comprising:
a second central conductor extension (132), the second central conductor extension (132) including a substantially cylindrical cavity (132a) therein;
a second outer conductor extension (134) spaced apart from and circumferentially surrounding the second central conductor extension (132); and
a second dielectric spacer (139) interposed between the second central conductor extension (132) and the second outer conductor extension (134);
wherein the first coaxial connector engages the second coaxial connector, the post (32a) of the first central conductor extension (32) being insertable into the cavity (132a) of the second central conductor extension (132) such that a capacitive element is created between the first (32) and second (132) central conductor extensions by a gap (g1) between the first central conductor extension (32) and the second central conductor extension, **characterized in that** the first coaxial connection includes a dielectric guard element attached to the first central conductor extension (32), the guard element having an outermost diameter that is greater than an outermost diameter of a dielectric layer (44) applied to the first central conductor extension (32).

2. The coaxial connector junction defined in Claim 1, wherein a first dielectric layer (44) is interposed between the post of the first central conductor extension (32) and the second central conductor extension (132).

3. The coaxial connector junction defined in Claim 2, wherein the first dielectric layer (44) overlies the first central conductor extension (32).

4. The coaxial connector junction defined in Claim 3, wherein the first dielectric layer (44) comprises a shrink sleeve applied over the post of the first central conductor extension (32).

5. The coaxial connector junction defined in Claim 1, wherein a capacitive element is formed between the first outer conductor extension (32) and the second outer conductor extension (132) by a gap therebetween.

6. The coaxial connector junction defined in Claim 5, further comprising a second dielectric layer (144) interposed between the first outer conductor extension (32) and the second outer conductor extension (132).

7. The coaxial connector junction defined in Claim 1, wherein the first outer conductor extension (32) at least partially overlies the second outer conductor extension (132).

8. The coaxial connector junction defined in Claim 1, further comprising a coaxial cable (10) attached to one of the first or second coaxial connectors.

9. The coaxial connector junction defined in Claim 1, wherein the engaged connectors define a longitudinal axis wherein each of the first central conductor extension (32), the first outer conductor extension (34), the second central conductor extension (132), and the second outer conductor extension (134) has circular symmetry about the longitudinal axis, such that electrical properties of the engaged first and second coaxial connectors are substantially the same irrespective of the relative orientations of the first and second coaxial connectors about the longitudinal axis.

10. The coaxial connector junction defined in Claim 1, wherein the connector junction further comprises a retaining member interposed between the first outer conductor extension (32) and the second outer conductor extension (34), the retaining member configured to prevent relative movement of the first and second coaxial connectors under bending load.

11. The coaxial connector junction defined in Claim 1, wherein the connector junction further comprises an RF-absorbent member interposed between the first outer conductor extension and the second outer conductor extension.

12. The coaxial connector junction defined in Claim 1, wherein the second inner conductor extension has a flared edge.

13. The coaxial connector junction defined in Claim 1, wherein the first dielectric spacer is in contact with the second dielectric spacer.

14. The coaxial connection junction defined in Claim 1, wherein one of the first and second coaxial connectors is mounted in a mounting structure.

## Patentansprüche

1. Koaxialstecker-Verbindung, umfassend:
(a) einen ersten Koaxialstecker, aufweisend:
eine erste mittige Leitererweiterung (32) einen im Wesentlichen zylindrischen Stift (32a) umfassend;
eine erste Außenleitererweiterung (34) die von der ersten mittigen Leitererweiterung (32) beabstandet ist und diese umlaufend umschließt; und
einen ersten dielektrischen Abstandshalter (37), der zwischen der ersten mittigen Leitererweiterung (32) und der ersten Außenleitererweiterung (34) zwischengeschaltet ist;
(b) einen zweiten Koaxialstecker, aufweisend:
eine zweite mittige Leitererweiterung (132), wobei die zweite mittige Leitererweiterung (132) einen im Wesentlichen zylindrischen Hohlraum aufweist (132a);
eine zweite Außenleitererweiterung (134), die von der zweiten mittigen Leitererweiterung (132) beabstandet ist und diese umlaufend umschließt; und
einen zweiten dielektrischen Abstandshalter (139), der zwischen der zweiten mittigen Leitererweiterung (132) und der zweiten Außenleitererweiterung (134) zwischengeschaltet ist; wobei der erste Koaxialstecker in den zweiten Koaxialstecker eingreift, wobei der Stift (32a) der ersten mittigen Leitererweiterung (32) in den Hohlraum (132a) der zweiten mittigen Leitererweiterung eingesetzt werden kann (132), so dass ein kapazitives Element zwischen der ersten (32) und zweiten (132) mittigen Leitererweiterung durch einen Spalt (g1) zwischen der ersten mittigen Leitererweiterung (32) und der zweiten mittigen Leitererweiterung erzeugt wird, **dadurch gekennzeichnet, dass** der erste Koaxialstecker ein dielektrisches Schutzelement aufweist, das an der ersten mittigen Leitererweiterung (32) befestigt ist, wobei das Schutzelement einen äußersten Durchmesser aufweist, der größer ist als ein äußerster Durchmesser einer dielektrischen Schicht (44), die auf die erste mittige Leitererweiterung aufgebracht ist (32).

2. Koaxialstecker-Verbindung nach Anspruch 1, wobei eine erste dielektrische Schicht (44) zwischen dem Stift der ersten mittigen Leitererweiterung (32) und der zweiten mittigen Leitererweiterung (132) zwischengeschaltet ist.

3. Koaxialstecker-Verbindung nach Anspruch 2, wobei die erste dielektrische Schicht (44) über der ersten mittigen Leitererweiterung (32) liegt.

4. Koaxialstecker-Verbindung nach Anspruch 3, wobei die erste dielektrische Schicht (44) einen Schrumpfschlauch umfasst, der über dem Stift der ersten mittigen Leitererweiterung (32) angebracht ist.

5. Koaxialstecker-Verbindung nach Anspruch 1, wobei ein kapazitives Element zwischen der ersten Außenleitererweiterung (32) und der zweiten Außenleitererweiterung (132) durch einen dazwischen liegenden Spalt ausgebildet ist.

6. Koaxialstecker-Verbindung nach Anspruch 5, ferner umfassend eine zweite dielektrische Schicht (144), die zwischen der ersten Außenleitererweiterung (32) und der zweiten Außenleitererweiterung (132) angeordnet ist.

7. Koaxialstecker-Verbindung nach Anspruch 1, wobei die erste Außenleitererweiterung (32) zumindest teilweise über der zweiten Außenleitererweiterung (132) liegt.

8. Koaxialstecker-Verbindung nach Anspruch 1, ferner umfassend ein Koaxialkabel (10), das an einem der ersten oder zweiten Koaxialstecker befestigt ist.

9. Koaxialstecker-Verbindung nach Anspruch 1, wobei die ineinandergreifenden Verbinder eine Längsachse definieren, wobei jede der ersten mittigen Leitererweiterung (32), der ersten Außenleitererweiterung (34), der zweiten mittigen Leitererweiterung (132) und der zweiten Außenleitererweiterung (134) eine Kreissymmetrie um die Längsachse aufweist, so dass die elektrischen Eigenschaften der ineinandergreifenden ersten und zweiten Koaxialstecker im Wesentlichen die gleichen sind, unabhängig von den relativen Ausrichtungen der ersten und zweiten Koaxialstecker um die Längsachse.

10. Koaxialstecker-Verbindung nach Anspruch 1, wobei die Steckerverbindung ferner ein Rückhalteelement aufweist, das zwischen der ersten Außenleitererweiterung (32) und der zweiten Außenleitererweiterung (34) angeordnet ist, wobei das Rückhalteelement konfiguriert ist, um eine Relativbewegung der ersten und zweiten Koaxialstecker unter Biegebeanspruchung zu verhindern.

11. Koaxialstecker-Verbindung nach Anspruch 1, wobei die Steckerverbindung ferner ein HF-absorbierendes Element aufweist, das zwischen der ersten Außenleitererweiterung und der zweiten Außenleitererweiterung angeordnet ist.

12. Koaxialstecker-Verbindung nach Anspruch 1, wobei die zweite Innenleiterverlängerung eine Bördelkante aufweist.

13. Koaxialstecker-Verbindung nach Anspruch 1, wobei der erste dielektrische Abstandhalter in Kontakt mit dem zweiten dielektrischen Abstandshalter steht.

14. Koaxialstecker-Verbindung nach Anspruch 1, wobei einer der ersten und zweiten Koaxialverbinder in einer Montagestruktur montiert ist.

## Revendications

1. Jonction de connecteur coaxial, comprenant :
(a) un premier connecteur coaxial, comprenant :
une première extension de conducteur central (32) comprenant un pilier sensiblement cylindrique (32a) ;
une première extension de conducteur extérieur (34) espacée de et entourant circonférentiellement la première extension de conducteur central (32) ; et
un premier élément d'espacement diélectrique (37) interposé entre la première extension de conducteur central (32) et la première extension de conducteur extérieur (34) ;
(b) un second connecteur coaxial, comprenant :
une seconde extension de conducteur central (132), la seconde extension de conducteur central (132) incluant une cavité sensiblement cylindrique (132a) à l'intérieur ;
une seconde extension de conducteur extérieur (134) espacée de et entourant circonférentiellement la seconde extension de conducteur central (132) ; et
un second élément d'espacement diélectrique (139) interposé entre la seconde extension de conducteur central (132) et la seconde extension de conducteur extérieur (134) ;
dans laquelle le premier connecteur coaxial engage le second connecteur coaxial,
le pilier (32a) de la première extension de conducteur central (32) est susceptible d'être inséré dans la cavité (132a) de la seconde extension de conducteur central (132) de telle sorte qu'un élément capacitif est créé entre la première extension de conducteur central (32) et la seconde extension de conducteur central (132) par un intervalle (g1) entre la première extension de conducteur central (32) et la seconde extension de conducteur central, **caractérisée en ce que** le premier connecteur coaxial inclut un élément de garde diélectrique attaché à la première extension de conducteur central (32), l'élément de garde ayant un diamètre tout à fait extérieur qui est plus grand qu'un diamètre tout à fait extérieur d'une couche diélectrique (44) appliquée sur la première extension de conducteur central (32).

2. Jonction de connecteur coaxial selon la revendication 1, dans laquelle une première couche diélectrique (44) est interposée entre le pilier de la première extension de conducteur central (32) et la seconde extension de conducteur central (132).

3. Jonction de connecteur coaxial selon la revendication 2, dans laquelle la première couche diélectrique (44) recouvre la première extension de conducteur central (32).

4. Jonction de connecteur coaxial selon la revendication 3, dans laquelle la première couche diélectrique (44) comprend un fourreau rétractable appliqué par-dessus le pilier de la première extension de conducteur central (32).

5. Jonction de connecteur coaxial selon la revendication 1, dans laquelle un élément capacitif est formé entre la première extension de conducteur extérieur (32) et la seconde extension de conducteur extérieur (132) par un intervalle entre celles-ci.

6. Jonction de connecteur coaxial selon la revendication 5, comprenant en outre une seconde couche diélectrique (144) interposée entre la première extension de conducteur extérieur (32) et la seconde extension de conducteur extérieur (132).

7. Jonction de connecteur coaxial selon la revendication 1, dans laquelle la première extension de conducteur extérieur (32) recouvre au moins partiellement la seconde extension de conducteur extérieur (132).

8. Jonction de connecteur coaxial selon la revendication 1, comprenant en outre un câble coaxial (10) attaché à l'un du premier conducteur coaxial ou du second connecteur coaxial.

9. Jonction de connecteur coaxial selon la revendication 1, dans laquelle les connecteurs engagés définissent un axe longitudinal, de sorte que chacune de la première extension de conducteur central (32), de la première extension de conducteur extérieur (34), de la seconde extension de conducteur central (132), et de la seconde extension de conducteur extérieur (134) a une symétrie circulaire autour de l'axe longitudinal, de telle façon que les propriétés électriques du premier et du second connecteurs coaxiaux engagés sont sensiblement les mêmes indépendamment des orientations relatives du premier et du second connecteur coaxial autour de l'axe longitudinal.

10. Jonction de connecteur coaxial selon la revendication 1, dans laquelle la jonction de connecteur comprend en outre un élément de retenue interposé entre la première extension de conducteur extérieur (32) et la seconde extension de conducteur extérieur (34), l'élément de retenue étant configuré pour empêcher un mouvement relatif du premier et du second connecteurs coaxiaux sous une charge de flexion.

11. Jonction de connecteur coaxial selon la revendication 1, dans laquelle la jonction de connecteur comprend en outre un élément absorbant les radiofréquences, interposé entre la première extension de conducteur extérieur et la seconde extension de conducteur extérieur.

12. Jonction de connecteur coaxial selon la revendication 1, dans laquelle la seconde extension de conducteur intérieur comporte un bord évasé.

13. Jonction de connecteur coaxial selon la revendication 1, dans laquelle le premier élément d'espacement diélectrique est en contact avec le second élément d'espacement diélectrique.

14. Jonction de connecteur coaxial selon la revendication 1, dans laquelle un parmi le premier et le second connecteurs coaxiaux est monté dans une structure de montage.
